# EUROPÄISCHE PATENTSCHRIFT

(11) **EP 2 297 552 B1**
(45) Veröffentlichungstag und Bekanntmachung des Hinweises auf die Patenterteilung: **22.02.2012**
(21) Anmeldenummer: 08773874.6
(22) Anmeldetag: 04.07.2008
(51) Int. Cl.: G01F 1/84

(54) **CORIOLIS-MASSENDURCHFLUSSMESSER UND VERFAHREN ZUM BETRIEB EINES CORIOLIS-MASSENDURCHFLUSSMESSERS**
CORIOLIS MASS FLOW METER AND METHOD FOR OPERATING A CORIOLIS MASS FLOW METER
DÉBITMÈTRE MASSIQUE À EFFET CORIOLIS ET PROCÉDÉ DE FONCTIONNEMENT D'UN DÉBITMÈTRE MASSIQUE À EFFET CORIOLIS

(43) Veröffentlichungstag der Anmeldung: 23.03.2011
(73) Patentinhaber: Siemens Aktiengesellschaft, 80333 München (DE)
(72) Erfinder: BIERWEILER, Thomas, 76297 Stutensee (DE); ENS, Wolfgang, 76351 Linkenheim (DE); LENZ, Henning, 76135 Karlsruhe (DE)
(86) Internationale Anmeldenummer: PCT/EP2008/005496
(87) Internationale Veröffentlichungsnummer: WO 2010/000290

(56) Entgegenhaltungen:
- WO-A-96/05484
- WO-A-2006/130415
- DE-B3-102006 017 676

## Beschreibung

Die Erfindung betrifft einen Coriolis-Massendurchflussmesser zur Messung des Massendurchflusses einer Flüssigkeit, wobei die Flüssigkeit einen Gasanteil enthalten kann. Die Erfindung betrifft auch ein entsprechendes Verfahren zum Betrieb eines Coriolis-Massendurchflussmessers.

Ein Coriolis-Massendurchflussmesser ist bekannt aus der DE 10 2004 014 029 A1. In der Prozess-, Mess- und Automatisierungstechnik werden für die Messung physikalischer Parameter eines in einer Rohrleitung strömenden Mediums oftmals Coriolis-Massendurchflussmessgeräte verwendet, die mittels eines in den Verlauf der mediumführenden Rohrleitung eingesetzten, im Betrieb vom Medium durchströmten Messaufnehmers und einer daran angeschlossenen Messbetriebsschaltung mit der Dichte korrespondierende Trägheitskräfte bewirken und von diesen abgeleitet ein den jeweiligen Massendurchfluss repräsentierendes Messsignal erzeugen. Zum Führen des Mediums umfassen die Messaufnehmer jeweils mindestens ein in einem Tragrahmen gehaltenes Messrohr mit einem gebogenen oder geraden Rohrsegment, das zum Erzeugen o.g. Reaktionskräfte im Betrieb vibrieren gelassen wird. Zum Erfassen der Vibrationen des Rohrsegmentes weisen die Messaufnehmer ferner jeweils eine auf Bewegungen des Rohrsegmentes reagierende, physikalisch-elektrische Sensoranordnung auf. Die Messung beruht darauf, dass das Medium durch das in die Rohrleitung eingefügte und im Betrieb schwingende Messrohr strömt, wodurch das Medium Corioliskräfte erfährt. Diese wiederum bewirken, dass einlassseitige und auslassseitige Bereiche des Messrohrs zueinander phasenverschoben schwingen. Die Größe dieser Phasenverschiebungen dient als ein Maß für den Massedurchfluss. Die Schwingungen des Messrohrs werden daher mittels zweier entlang des Messrohrs voneinander beabstandeter Schwingungssensoren der vorgenannten Sensoranordnung erfasst und in Schwingungsmesssignale gewandelt, aus deren gegenseitiger Phasenverschiebung der Massedurchfluss abgeleitet wird.

Bei der Verwendung von Massedurchflußmessern vom Vibrationstyp hat sich jedoch gezeigt, dass bei nicht homogenen Medien, insbesondere zwei- oder mehrphasigen Medien, die von den Schwingungen des Messrohrs abgeleiteten Größen, insbesondere auch die erwähnte Phasenverschiebung, in erheblichem Maße Schwankungen unterliegen und so gegebenenfalls für die Messung des jeweiligen physikalischen Parameters ohne abhelfende Maßnahmen völlig unbrauchbar werden können. Solche inhomogene Medien können beispielsweise Flüssigkeiten sein, in die ein in der Rohrleitung vorhandenes Gas, insbesondere Luft, eingetragen ist. Die DE 10 2004 014 029 A1 schlägt zur Lösung dieses Problems vor, einen aus dem Erregerstrom abgeleiteten, eine scheinbare Viskosität wiedergebenden Zwischenwert zu erzeugen, anhand dessen ein Korrekturfaktor für den Massendurchflussmesser abgeleitet wird.

In dem Artikel "Neue Parameter zur Analyse der Störungen eines Coriolis-Massemessers", Technisches Messen, 74, 2007, S. 577-588, werden verschiedene Kennzahlen zur Erkennung von Gasanteilen in einer Flüssigkeit, deren Durchfluss gemessen werden soll, vorgestellt. Bei der Amplitudekennzahl wird das diskrete Spektrum des Sensorsignals eines der beiden Sensoren gebildet und ein Nutzsignal und ein Rauschanteil identifiziert. Die Amplitudenkennzahl ist dann definiert als die Differenz der aufsummierten Nutzfrequenzen und der aufsummierten Rauschfrequenzen. Als weitere Kennzahlen kommen in Betracht: das Verhältnis des Erregerstroms zur Sensorspannung, das Verhältnis des Erregerstroms ohne Gasblasen zum Erregerstrom mit Gasblasen, das Verhältnis der Sensorspannung mit Gasblasen zur Sensorspannung ohne Gasblasen sowie die Verschiebung der Resonanzfrequenz.

Die WO 2006/130415 A und die WO 2006/127527 A beschreiben Methoden zur Erkennung und zum Zählen von Gasblasen mittels zusätzlicher Erregung anderer Frequenzen und Vergleich der Antwort mit einem Referenzspektrum. Die Ermittlung sowohl des Massendurchflusses als auch der Dichte der Flüssigkeiten und des Gases ist dadurch möglich. Ein Problem bei diesem Ansatz ist, dass er den Einsatz einer geeigneten Anregungsquelle erfordert.

Die DE 10 2006 017 676 B3 offenbart ein Verfahren zum Betrieb eines Coriolis-Massendurchflussmessers. Ein Zweiphasenfluss wird mithilfe von verschiedenen Merkmalen aus mindestens zwei verschiedenen Gruppen erkannt. Die Gruppen sind folgenderma-βen unterteilt: Größen basierend auf Reibungsverlusten innerhalb der Mehrphasenströmung, Größen basierend auf einer Inhomogenität der Mehrphasenströmung, Größen basierend auf einer Modellierung des nominellen Verhaltens des Coriolis-Massendurchflussmessers und Größen basierend auf Laufzeiteffekten der Mehrphasenströmung zwischen zwei in Längsrichtung des Messrohrs voneinander beabstandeten Erfassungsstellen für die resultierenden Schwingungen. Dieses Verfahren erlaubt zwar die Erkennung eines Zweiphasenflusses aber nicht deren Quantifizierung.

In der US 2005/0284237 A1 ist eine Methode zur Korrektur des Fehlers der Massendurchflussmessung beschrieben. Ein neuronales Netz, das Temperatur, Dämpfung und Dichteabfall als Eingangsparameter hat, korrigiert den Fehler des Massendurchflussmessers. Hiermit wird nur eine teilweise Kompensation erreicht, dass heißt, der Fehler bleibt zwar begrenzt, jedoch wird die Spezifikation verlassen. Das Verfahren erfordert zudem erheblichen Rechen- und Speicheraufwand.

Aufgabe der Erfindung ist es, einen Coriolis-Massendurchflussmesser anzugeben, durch den bei einer Durchströmung mit einer Flüssigkeit ein Gasanteil bestimmbar ist. Weitere Aufgabe der Erfindung ist die Angabe eines Verfahrens zum Betrieb eines Coriolis-Massendurchflussmessers, bei dem bei einer Durchströmung mit einer Flüssigkeit ein Gasanteil bestimmbar ist.

Erfindungsgemäß wird die auf einen Coriolis-Massendurchflussmesser gerichtete Aufgabe gelöst durch einen Coriolis-Massendurchflussmesser zur Messung des Massendurchflusses einer Flüssigkeit durch eine Leitung, mit einer ein Rohsignal erzeugenden Messeinheit und einer mit der Messeinheit verbundenen Auswerteeinheit, welche einen Datenspeicher und einen Prozessor umfasst, wobei in dem Datenspeicher eine Maximalkurve und eine Minimalkurve hinterlegt sind, wobei mittels des Prozessors aus mehreren zeitlich aufeinander folgenden Rohsignalen eine Standardabweichung ermittelt und diese einerseits in die Maximalkurve eingesetzt und daraus eine Maximalschranke errechnet und andererseits in die Minimalkurve eingesetzt und daraus eine Minimalschranke errechnet wird und wobei aus der Maximalschranke und der Minimalschranke ein Gasanteil in der Flüssigkeit berechnet und angezeigt wird.

Die Erfindung geht von der Erkenntnis aus, dass bestimmte Merkmale der Messung eines Coriolis-Massendurchflussmessers über einen weiten Bereich von Durchflussraten und verschiedenen Arten von Flüssigkeit/Gasgemischen eine charakteristische Signatur erzeugen, die einen quantitativen Rückschluss auf den Gasanteil gestattet. Diese charakteristische Signatur lässt sich dadurch abbilden, dass der Bereich der Merkmalswerte in Abhängigkeit vom Gasanteil zwischen einer Maximalkurve und eine Minimalkurve eingeschlossen wird. Indem nun diese Maximalkurve und Minimalkurve als Begrenzungen der Merkmalswerte im Speicher hinterlegt werden, kann durch Einsetzen der Standardabweichung in diese Kurven ein Intervall eines möglichen Gasanteils festgelegt und hieraus der Gasanteil mit einem definierten Fehler bestimmt werden.

Bevorzugtermaßen sind die Maximalkurve und die Minimalkurve durch Bildung der Inversen einer Hüllkurve aus einer Reihe von zuvor für verschiedene Gasanteile ermittelten Standardabweichungen errechnet. Weiter bevorzugt ist die Hüllkurve dabei durch eine der folgenden Funktionsarten gebildet: eine lineare oder stückweise lineare Kurve, ein Polynom n-ter Ordnung, ein Spline, ein neuronales Netz, eine exponentielle oder eine logarithmische Kurve. Eine Hüllkurve wird also in an sich bekannter Form aus einer Menge von Standardabweichungen modelliert. Bevorzugt werden hierzu einmalig Standardabweichungen abhängig von bekannten Gasanteilen ermittelt. Aus einer Untermenge von maximalen Werten wird dann die Maximalkurve und aus einer Untermenge von minimalen Werten die Minimalkurve durch Invertierung einer jeweiligen Hüllkurve berechnet.

Weiter bevorzugt wird als Rohsignal die Eigenfrequenz einer schwingenden Durchflussmessstelle des Coriolis-Massendurchflussmessers verwendet. Bevorzugtermaßen wird ergänzend oder alternativ dazu als Rohsignal eine relative Phasenlage von zwei Schwingungssignalen verwendet, die mit Hilfe von zwei entlang der Durchflussmessstelle in Fließrichtung voneinander beabstandeten Schwingungssensoren erfasst werden.

Vorzugsweise werden aus mindestens zwei Rohsignalen verschiedener Messgrößen und diesen jeweils zugeordneten Hüllkurven jeweils zugeordnete Maximal- und Minimalschranken errechnet und für die Berechnung des Gasanteils die kleinste Maximalschranke und die größte Minimalschranke verwendet. Weiter bevorzugt wird aus der Differenz der größten Maximalschranke und der kleinsten Minimalschranke eine Fehlerangabe berechnet und angezeigt.

Bevorzugtermaßen wird der Gasanteil als arithmetischer Mittelwert der kleinsten Maximal- und der größten Minimalschranke berechnet.

Bevorzugt ist der Coriolis-Massendurchflussmesser digital messend ausgebildet. Die beschriebene Berechnung des Gasanteils lässt sich in der Regel bereits ohne Hardwareänderungen über den Prozessor und Speicher des Gerätes einfach implementieren.

Vorzugsweise wird die Standardabweichung vor der Weiterverarbeitung gefiltert.

Erfindungsgemäß wird die auf ein Verfahren gerichtete Aufgabe gelöst durch ein Verfahren zum Betrieb eines Coriolis-Massendurchflussmessers zur Messung des Massendurchflusses einer Flüssigkeit durch eine Leitung mit einer ein Rohsignal erzeugenden Messeinheit und eine mit der Messeinheit verbundenen Auswerteeinheit, welche einen Datenspeicher und einen Prozessor umfasst, wobei in dem Datenspeicher eine Maximalkurve und eine Minimalkurve hinterlegt sind, wobei mittels des Prozessors aus mehreren zeitlich aufeinander folgenden Rohsignalen eine Standardabweichung ermittelt und diese einerseits in die Maximalkurve eingesetzt und daraus eine Maximalschranke errechnet und andererseits in die Minimalkurve eingesetzt und daraus eine Minimalschranke errechnet wird und wobei aus der Maximalschranke und der Minimalschranke ein Gasanteil in der Flüssigkeit berechnet und angezeigt wird.

Die Erfindung wird anhand der Zeichnung in einem Ausführungsbeispiel näher erläutert. Es zeigen teilweise schematisch:
- FIG 1: einen Coriolis-Massendurchflussmesser,
- FIG 2: ein Ablaufdiagramm zur Messung eines Gasanteils,
- FIG 3: die Standardabweichung der Eigenfrequenz in Abhängigkeit vom Gasanteil für verschiedene Durchflussraten,
- FIG 4: Hüllkurven für die Standardabweichung der Frequenz bei verschiedenen Gasanteilen,
- FIG 5: Hüllkurven für die Standardabweichung der Phasenlage bei verschiedenen Gasanteilen und
- FIG 6: einen Vergleich von berechneten Gasanteilen mit den tatsächlichen Gasanteilen.

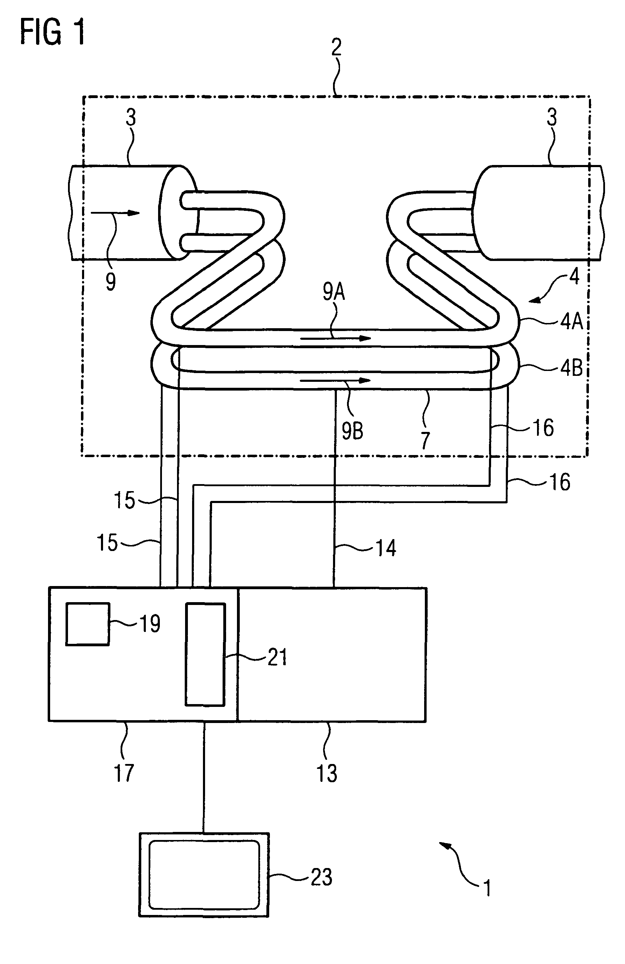

FIG 1 zeigt einen Coriolis-Massendurchflussmesser 1. Der Coriolis-Massendurchflussmesser 1 weist eine Leitung 3 auf. Die Leitung 3 spaltet sich an einer Durchflussmessstelle 4 in zwei Teilleitungen 4A, 4B auf. Die zwei Teilleitungen 4A, 4B erstrecken sich parallel zueinander in radialer Richtung von der Durchflussrichtung in der Leitung 3 weg, laufen dann parallel zu dieser'Durchflussrichtung und erstrecken sich anschließend radial wieder zur Durchflussrichtung hin.

Eine Anregungseinheit 13 ist mit der Durchflussmessstelle 4 mit einer Anregungskopplung 14 so verbunden, dass sie diese in Schwingungen versetzen kann. Eine Auswerteeinheit 17 ist mit der Durchflussmessstelle 4 durch eine Auswertekopplung 15 und eine Auswertekopplung 16 so verbunden, dass sie die Auslenkungen einerseits der Teilleitung 4A und andererseits der Teilleitung 4B oder deren relative Lage zueinander messen kann. Die Auswerteeinheit 17 weist einen Prozessor 19 und einen Datenspeicher 21 auf. Die Auswerteeinheit 17 ist mit einer Anzeigeeinheit 23 verbunden.

Im Betrieb des Coriolis-Massendurchflussmessers strömt eine Flüssigkeit 9 durch die Leitung 3 und teilt sich in den Teilleitungen 4A, 4B in zwei Teilströme 9A, 9B. Wie eingangs beschrieben beruht das Messprinzip für den Massendurchfluss und die Dichte darauf, dass die auf die Teilströme wirkenden Trägheitskräfte Änderungen in der relativen Phasenlage der Schwingungen der Teilleitungen 4A, 4B zueinander, die durch die Auswertekopplungen 15 und 16 erfasst werden, oder Änderungen in der Eigenfrequenz der Schwingung der Durchflussmessstelle 4 hervorrufen, welche von der Auswerteeinheit 17 erkannt werden. Ein Gasanteil in der Flüssigkeit 9 kann diese Messung erheblich verfälschen. Daher ist eine Bestimmung dieses Gasanteils wesentlich. Im Folgenden wird beschrieben, wie dieser Gasanteil in einfacher Weise bestimmt werden kann.

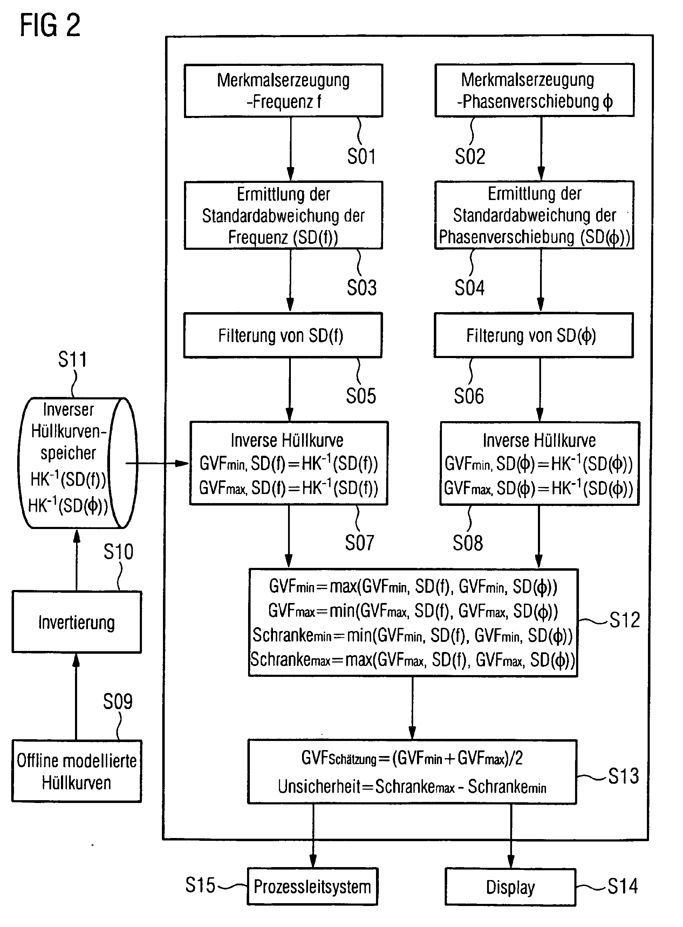

FIG 2 zeigt ein Ablaufdiagramm für ein Verfahren zur Bestimmung des Gasanteils. Es werden die Eigenfrequenz f in Schritt S01 und die Phasenverschiebung Φ in Schritt S02 gemessen. Aus z.B. den letzten zehn Werten dieser Rohsignale werden in Schritt S03 eine Standardabweichung SD(f) der Eigenfrequenz f und in Schritt S04 eine Standardabweichung SD(Φ) der Phasenlage Φ berechnet. Diese Werte werden in Schritten S05 bzw. S06 gefiltert und danach in Schritten S07 bzw. S08 in jeweils zugeordnete, im Datenspeicher 21 (Figur 1) hinterlegte, inverse Hüllkurven eingesetzt. Diese Hüllkurven wurden zuvor aus bei bekannten Gasanteilen vorliegenden Messwerten in Schritt S09 modelliert, in Schritt S10 invertiert und in Schritt S11 als Hüllkurven HK⁻¹(SD(f)) sowie HK⁻¹(SD(Φ)) im Datenspeicher 21 (Figur 1) hinterlegt. Für maximale Messwerte wurden dabei maximale Hüllkurven und für minimale Messwerte minimale Hüllkurven modelliert. Deren Inverse liegen nunmehr als Maximalkurven (MAX) und Minimalkurven (MIN) im Datenspeicher 21 (Figur 1) vor, in die die Standardabweichungen SD(f) und SD(Φ) in Schritt S12 eingesetzt werden. Es können dabei verschiedene Hüllkurven für einen Wert zum Einsatz kommen, also z.B. Hüllkurven mit verschiedener Funktionsart wie Polynome n-ter Ordnung oder Splines, wobei dann für den Endwert ein Mittelwert gebildet wird. Für den Gasanteil GVF ergeben sich Zwischenwerte zwischen den Grenzen GVFₘᵢₙ(SD(f)) und GVFₘₐₓ(SD(f)) und zwischen den Grenzen GVFₘᵢₙ(SD(Φ)) und GVFₘₐₓ(SD(Φ)). Daraus folgt eine Maximalschranke GVFₘₐₓ als der Kleinste der Werte von GVFₘₐₓ(SD(f)) und GVFₘₐₓ(SD(Φ)). Weiterhin folgt eine Minimalschranke GVFₘᵢₙ als der Größte der Werte von GVFₘᵢₙ(SD(f)) und GVFₘᵢₙ(SD(Φ)). Schließlich wird in Schritt S13 der Endwert des Gasanteils GVF berechnet als Hälfte der Summe von Maximalschranke und Minimalschranke, das heißt (GVFₘᵢₙ + GVFₘₐₓ)/2. Vorteilhafterweise ist mit dieser Methode auch in einfacher Weise unmittelbar eine Fehlerangabe möglich, berechnet aus der Differenz des größten Wertes von GVFₘₐₓ(SD(f) und GVFₘₐₓ(SD(Φ)) und des kleinsten Wertes von GVFₘᵢₙ(SD(f) und GVFₘᵢₙ(SD(Φ)). Der Gasanteil GVF wird mit der Fehlerangabe in Schritt 14 auf der Anzeigeeinheit 23 (Figur 1) angezeigt und in Schritt S15 beispielsweise über einen Feldbus an eine übergeordnete Leitstation in einer automatisierungstechnischen Anlage zur weiteren Verarbeitung ausgegeben.

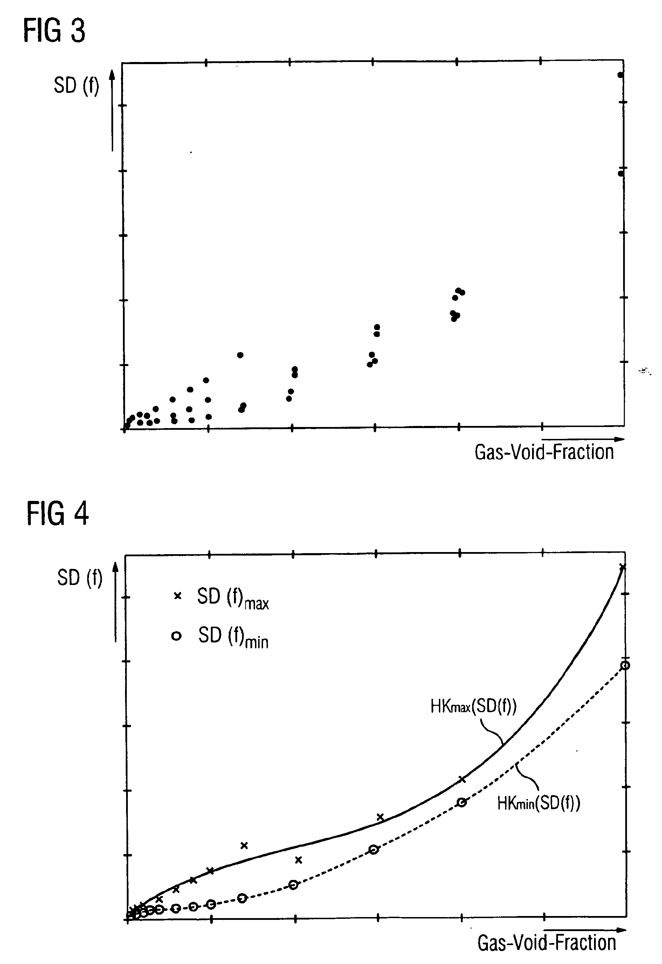

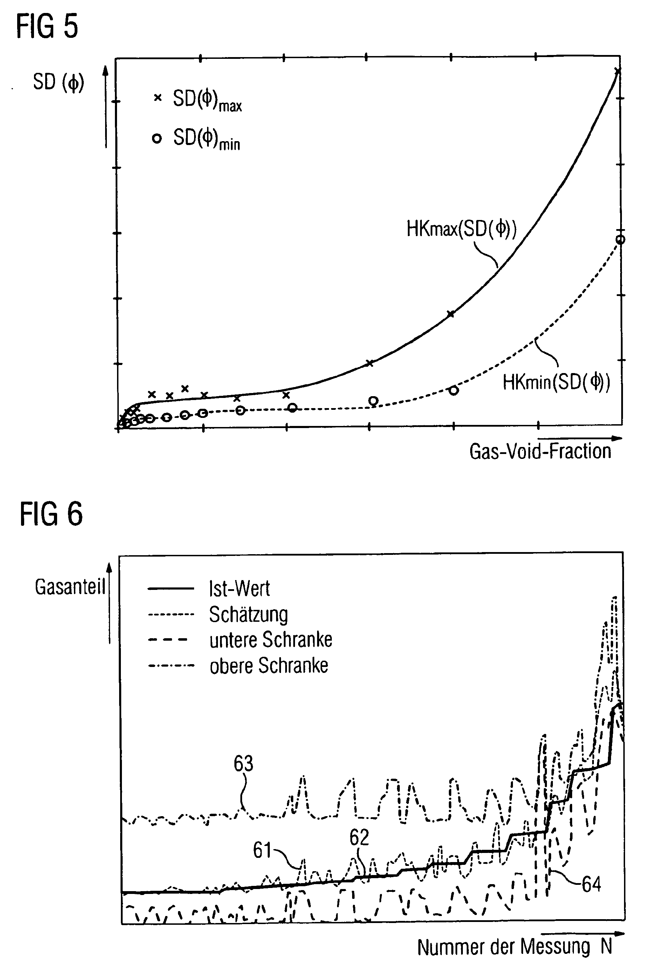

FIG 3 zeigt eine Serie von gemessenen Standardabweichungen der Eigenfrequenz in Abhängigkeit vom Gasanteil. Auf der Abszisse sind die Gasanteile als Gas-Void-Fraction, auf der Ordinate Standardabweichungen SD(f) aufgetragen. Aus diesen Messwerten werden die maximalen Werte genommen, um eine maximale Hüllkurve zu bestimmen, und die minimalen Werte, um eine minimale Hüllkurve zu interpolieren. Dies ist in FIG 4 dargestellt, wobei die Hüllkurven HKₘₐₓ(SD(f)) bzw. HKₘᵢₙ(SD(f)) als Polynome dritter Ordnung modelliert wurden. Durch Bilden der inversen Funktion von HKₘₐₓ(SD(f)) wird eine nicht dargestellte Maximalkurve MAX und durch Invertieren der Funktion HKₘᵢₙ(SD(f)) eine Minimalkurve MIN ermittelt. FIG 5 zeigt eine vergleichbare Darstellung für die Phasenverschiebung mit Hüllkurven HKₘₐₓ(SD(Φ)) und HKₘᵢₙ(SD(Φ)).

In FIG 6 ist gezeigt, wie der durch einen Verlauf 61 wiedergegebene, berechnete Gasanteil mit einem tatsächlichen Gasanteil entsprechend Verlauf 62 übereinstimmt. Es wird eine gute Übereinstimmung erzielt. Auf der Abszisse ist die Nummer der Messung N, auf der Ordinate der jeweilige Gasanteil aufgetragen. Zusätzlich sind der Verlauf 63 der oberen Schranke und der Verlauf 64 der unteren Schranke dargestellt.

## Patentansprüche

1. Coriolis-Massendurchflussmesser (1) zur Messung des Massendurchflusses einer Flüssigkeit (9) durch eine Leitung (3), mit einer Messeinheit (2) zur Erzeugung zumindest eines Rohsignals (f, Φ) und mit einer mit der Messeinheit (2) verbundenen Auswerteeinheit (17), welche einen Datenspeicher (21) und einen Prozessor (19) umfasst, **dadurch gekennzeichnet, dass** in dem Datenspeicher (21) eine Maximalkurve (MAX) und eine Minimalkurve (MIN) hinterlegt sind, und dass die Auswerteeinheit (2) derart ausgestaltet ist, dass aus mehreren zeitlich aufeinander folgenden Rohsignalen (f, Φ) eine Standardabweichung (SD(f), SD(Φ)) ermittelt und diese einerseits in die Maximalkurve (MAX) eingesetzt und daraus eine Maximalschranke bestimmt und andererseits in die Minimalkurve (MIN) eingesetzt und daraus eine Minimalschranke bestimmt wird und dass aus der Maximalschranke und der Minimalschranke ein Gasanteil in der Flüssigkeit berechnet und angezeigt wird.

2. Coriolis-Massendurchflussmesser (1) nach Anspruch 1, **dadurch gekennzeichnet, dass** die Maximalkurve (MAX) und die Minimalkurve (MIN) durch Bildung der Inversen einer Hüllkurve (HK) aus einer Reihe von Standardabweichungen errechnet ist.

3. Coriolis-Massendurchflussmesser (1) nach Anspruch 2, **dadurch gekennzeichnet, dass** die Hüllkurve (HK) durch eine der folgenden Funktionsarten gebildet ist: eine lineare oder stückweise lineare Kurve, ein Polynom n-ter Ordnung, ein Spline, ein neuronales Netz, eine exponentielle oder eine logarithmische Kurve.

4. Coriolis-Massendurchflussmesser (1) nach einem der vorhergehenden Ansprüche, **dadurch gekennzeichnet, dass** eine bei einer Eigenfrequenz schwingende Durchflussmessstelle (4) vorhanden ist, und dass als Rohsignal (f) die Eigenfrequenz verwendet wird.

5. Coriolis-Massendurchflussmesser (1) nach einem der vorhergehenden Ansprüche, **dadurch gekennzeichnet, dass** zwei entlang der Durchflussmessstelle (4) voneinander beabstandete Schwingungssensoren zur Erfassung von Schwingungen vorhanden sind und dass die relative Phasenlage der Schwingungen als Rohsignal (Φ) verwendet wird.

6. Coriolis-Massendurchflussmesser (1) nach einem der vorhergehenden Ansprüche, **dadurch gekennzeichnet, dass** aus Standardabweichungen mindestens zweier verschiedener Rohsignale (f; Φ) diesen jeweils zugeordnete Hüllkurven (HK) berechnet werden, dass mit diesen Hüllkurven (HK) jeweils zugeordnete Maximal- und Minimalschranken bestimmt werden und dass für die Berechnung des Gasanteils die kleinste Maximalschranke und die größte Minimalschranke verwendet werden.

7. Coriolis-Massendurchflussmesser (1) nach Anspruch 6, **dadurch gekennzeichnet, dass** aus der Differenz der größten Maximalschranke und der kleinsten Minimalschranke eine Fehlerangabe berechnet und angezeigt wird.

8. Coriolis-Massendurchflussmesser (1) nach einem der vorhergehenden Ansprüche, **dadurch gekennzeichnet, dass** der Gasanteil als arithmetischer Mittelwert der Maximal- und der Minimalschranke berechnet wird.

9. Coriolis-Massendurchflussmesser (1) nach einem der vorhergehenden Ansprüche, welches digital messend ausgebildet ist.

10. Coriolis-Massendurchflussmesser (1) nach einem der vorhergehenden Ansprüche, **dadurch gekennzeichnet, dass** die Standardabweichung vor der Weiterverarbeitung gefiltert wird.

11. Verfahren zum Betrieb eines Coriolis-Massendurchflussmessers (1) zur Messung des Massendurchflusses einer Flüssigkeit (9) durch eine Leitung (3), mit einer Messeinheit (2), die zur Erzeugung zumindest eines Rohsignals (f, Φ) dient, und mit einer mit der Messeinheit (2) verbundenen Auswerteeinheit (17), welche einen Datenspeicher (21) und einen Prozessor (19) umfasst, **dadurch gekennzeichnet, dass** in dem Datenspeicher (21) eine Maximalkurve (MAX) und eine Minimalkurve (MIN) hinterlegt sind, wobei mittels des Prozessors aus mehreren zeitlich aufeinander folgenden Rohsignalen (f, Φ) eine Standardabweichung (SD(f), SD(Φ))) ermittelt und diese einerseits in die Maximalkurve (MAX) eingesetzt und daraus eine Maximalschranke bestimmt und andererseits in die Minimalkurve (MIN) eingesetzt und daraus eine Minimalschranke bestimmt wird und wobei aus der Maximalschranke und der Minimalschranke ein Gasanteil in der Flüssigkeit berechnet und angezeigt wird.

## Claims

1. Coriolis mass flow meter (1) for measuring the mass flow of a liquid (9) through a conduit (3), having a measuring unit (2) for producing at least one raw signal (f, Φ), and having an evaluation unit (17) which is connected to the measuring unit (2) and comprises a data memory (21) and a processor (19), **characterized in that** a maximum curve (MAX) and a minimum curve (MIN) are stored in the data memory (21), and **in that** the evaluation unit (2) is configured in such a way that a plurality of temporally consecutive raw signals (f, Φ) are used to determine a standard deviation (SD(f), SD(Φ)) which, on the one hand, is substituted in the maximum curve (MAX) and a maximum bound is determined therefrom and, on the other hand, is substituted in the minimum curve (MIN) and a minimum bound is determined therefrom, and **in that** a gas component in the liquid is calculated from the maximum bound and the minimum bound and displayed.

2. Coriolis mass flow meter (1) according to Claim 1, **characterized in that** the maximum curve (MAX) and the minimum curve (MIN) are calculated by forming the inverses of an envelope (HK) from a sequence of standard deviations.

3. Coriolis mass flow meter (1) according to Claim 2, **characterized in that** the envelope (HK) is formed by one of the following types of function: a linear or piecewise linear curve, an nth order polynomial, a spline, a neural network, an exponential or a logarithmic curve.

4. Coriolis mass flow meter (1) according to one of the preceding claims, **characterized in that** a flow measurement location (4) vibrating at its natural frequency exists, and **in that** the natural frequency is used as raw signal (f).

5. Coriolis mass flow meter (1) according to one of the preceding claims, **characterized in that** two vibration sensors spaced apart from one another along the flow measurement location (4) exist, and **in that** the relative phase angle of the vibrations is used as raw signal (Φ).

6. Coriolis mass flow meter (1) according to one of the preceding claims, **characterized in that** standard deviations of at least two different raw signals (f; Φ) are used to calculate envelopes (HK) respectively assigned thereto, **in that** respectively assigned maximum and minimum bounds are determined with the aid of these envelopes (HK), and **in that** the least maximum bound and the greatest minimum bound are used to calculate the gas component.

7. Coriolis mass flow meter (1) according to Claim 6, **characterized in that** an error statement is calculated from the difference between the greatest maximum bound and the least minimum bound and displayed.

8. Coriolis mass flow meter (1) according to one of the preceding claims, **characterized in that** the gas component is calculated as arithmetic mean of the maximum bound and the minimum bound.

9. Coriolis mass flow meter (1) according to one of the preceding claims, which is designed to measure digitally.

10. Coriolis mass flow meter (1) according to one of the preceding claims, **characterized in that** the standard deviation is filtered before further processing.

11. Method for operating a coriolis mass flow meter (1) for measuring the mass flow of a liquid (9) through a conduit (3), having a measuring unit (2) which serves to produce at least one raw signal (f, Φ), and having an evaluation unit (17) which is connected to the measuring unit (2) and comprises a data memory (21) and a processor (19), **characterized in that** a maximum curve (MAX) and a minimum curve (MIN) are stored in the data memory (21), by means of the processor a plurality of temporally consecutive raw signals (f, Φ) being used to determine a standard deviation (SD(f), SD(Φ)) which, on the one hand, is substituted in the maximum curve (MAX) and a maximum bound is determined therefrom and, on the other hand, is substituted in the minimum curve (MIN) and a minimum bound is determined therefrom, and a gas component in the liquid being calculated from the maximum bound and the minimum bound and displayed.

## Revendications

1. Débitmètre ( 1 ) massique à effet Coriolis pour la mesure du débit massique d'un liquide ( 9 ) passant dans un conduit ( 3 ), comprenant une unité ( 2 ) de mesure pour la production d'au moins un signal ( f, Φ ) brut et comprenant une unité ( 17 ) d'exploitation qui est reliée à l'unité ( 12 ) de mesure et qui comprend une mémoire ( 21 ) de données et un processeur ( 19 ), **caractérisé en ce qu'**une courbe ( MAX ) maximum et une courbe ( MIN ) minimum sont mémorisées dans la mémoire ( 21 ) de données et **en ce que** l'unité ( 2 ) d'exploitation est telle qu'un écart-type ( SD( f ), SD ( Φ )) est déterminé à partir de plusieurs signaux ( f, Φ ) bruts se succédant dans le temps et celui-ci d'une part est utilisé dans la courbe ( MAX ) maximum et il en est déterminée une limite maximum et d'autre part est utilisé dans la courbe ( MIN ) minimum et il en est déterminée une limite minimum et **en ce qu'**une proportion de gaz dans le liquide est calculée à partir de la limite maximum et de la limite minimum et est affichée.

2. Débitmètre ( 1 ) massique à effet Coriolis suivant la revendication 1, **caractérisé en ce que** la courbe ( MAX ) maximum et la courbe ( MIN ) minimum sont calculées par formation des inverses d'une courbe ( HK ) enveloppe à partir d'une série d'écart-types.

3. Débitmètre ( 1 ) massique à effet Coriolis suivant la revendication 2, **caractérisé en ce que** la courbe ( HK ) enveloppe est formée par l'un des types de fonction suivante une courbe linéaire ou linéaire par tronçon, un polynôme d'ordre n, un spline, un réseau neuronale, une courbe exponentielle ou une courbe logarithmique.

4. Débitmètre ( 1 ) massique à effet Coriolis suivant l'une des revendications précédentes, **caractérisé en ce qu'**il y a un point ( 4 ) de mesure de débit oscillant à une fréquence propre et **en ce que** la fréquence propre est utilisée comme signal ( f ) brut.

5. Débitmètre ( 1 ) massique à effet Coriolis suivant l'une des revendications précédentes, **caractérisé en ce qu'**il y a pour la détection d'oscillations deux capteurs d'oscillations à distance l'un de l'autre le long du point ( 4 ) de mesure de débit et **en ce que** la position relative en phase des oscillations est utilisée comme signal ( Φ ) brut.

6. Débitmètre ( 1 ) massique à effet Coriolis suivant l'une des revendications précédentes, **caractérisé en ce qu'**à partir des écart-types d'au moins deux signaux ( f, Φ ) bruts différents, des courbes ( HK ) enveloppes affectées respectivement à ceux-ci sont calculées, **en ce que** des limites maximum et minimum affectées respectivement à ces courbes ( HK ) enveloppes sont déterminées et **en ce que**, pour le calcul de la proportion de gaz, la limite maximum la plus petite et la limite minimum à la plus grande sont utilisées.

7. Débitmètre ( 1 ) massique à effet Coriolis suivant la revendication 6, **caractérisé en ce qu'**une indication d'erreur est calculée à partir de la différence de la limite maximum la plus grande et de la limite minimum la plus petite et est affichée.

8. Débitmètre ( 1 ) massique à effet Coriolis suivant l'une des revendications précédentes, **caractérisé en ce que** la proportion de gaz est calculée en tant que moyenne arithmétique de la limite maximum et de la limite minimum.

9. Débitmètre ( 1 ) massique à effet Coriolis suivant l'une des revendications précédentes, qui est constitué à mesure numérique.

10. Débitmètre ( 1 ) massique à effet Coriolis suivant l'une des revendications précédentes, **caractérisé en ce que** l'écart-type est filtré avant d'être traité davantage.

11. Procédé pour faire fonctionner un débitmètre ( 1 ) massique à effet Coriolis pour la mesure du débit massique d'un liquide ( 9 ) passant dans un conduit ( 3 ), comprenant une unité ( 2 ) de mesure qui sert à la production d' au moins un signal ( f, Φ ) brut et comprenant une unité ( 17 ) d'exploitation qui est reliée à l'unité de mesure et qui comprend une mémoire ( 21 ) de données et un processeur ( 19 ), **caractérisé en ce que** l'on mémorise dans la mémoire ( 21 ) de données une courbe ( MAX ) maximum et une courbe ( MIN ) minimum, on détermine au moyen du processeur à partir de plusieurs signaux ( f, Φ ) bruts se succédant dans le temps, un écart-type ( SD( ( f ), SD ( Φ )) et on l'utilise d'une part dans la courbe (MAX) maximum et on en détermine une limite maximum et d'autre part dans la courbe ( MIN ) minimum et on en détermine une limite minimum et on calcule une proportion de gaz dans le liquide à partir de la limite maximum et de la limite minimum et on l'affiche.
